# NEW EUROPEAN PATENT SPECIFICATION

(11) **EP 0 183 466 B2**
(45) Date of publication and mention of the opposition decision: **20.08.1997**
(45) Mention of the grant of the patent: 29.08.1990
(21) Application number: 85308398.8
(22) Date of filing: 18.11.1985
(51) Int. Cl.: C08F 2/10, C08F 20/54

(54) **Process for the production of a water-soluble polymer dispersion**
Verfahren zur Herstellung einer wasserlöslichen Polymerdispersion
Procédé de préparation d'une dispersion d'un polymère soluble dans l'eau

(30) Priority: 19.11.1984 JP 244152/84; 18.07.1985 JP 158709/85; 18.07.1985 JP 158711/85
(43) Date of publication of application: 04.06.1986
(73) Proprietor: HYMO CORPORATION, Tokyo (JP)
(72) Inventor: Takeda, Hisao, Zama-shi Kanagawa-ken (JP); Kawano, Mutsumi, Chigasaki-shi Kanagawa-ken (JP)
(74) Representative: Vossius, Volker, Dr.

(56) References cited:
- FR-A- 2 251 367
- GB-A- 1 206 711
- US-A- 4 380 600

## Description

This invention relates to a process for the production of a dispersion of a water-soluble polymer, which polymers are widely used, for example as flocculating agents for waste water treatment, dehydrating agents, chemicals for use in paper making processes, dispersion stabilizers for various suspensions, soil improvers and so on.

Heretofore, as processes for the production of water-soluble polymers used in such fields as those described above, there have been proposed, for example, stationary polymerization in an aqueous solution, water-in-oil type emulsion polymerization (Japanese Patent Application Laid-open No. 102388/ 1979), and suspension polymerization in a hydrophobic solvent (Japanese Patent Application Laid-open No. 69196/1979). Furthermore, Japanese Patent Application Laid-open No. 70489/1975 discloses precipitation polymerization in an aqueous solution of a salt and Japanese Patent Publication No. 14907/ 1971 discloses polymerization in an aqueous solution mainly comprising acrylic acid a a low pH and containing a salt.

In stationary polymerization in an aqueous solution, because the polymerization is conducted at a monomer concentration of 10% by weight or more in order to obtain a polymer of a high molecular weight, the product is in hydrated gel form and hence cannot be easily dissolved as such and therefore it is necessary either to dilute and sell the same as a flowable, low concentration product or to dry it to a powder. Where it is put on the market at a low concentration, the transport cost is increased, whereas the heat energy required for drying to a powder is great. Also, three-dimensional crosslinking is brought about by heating and an undesirable water-insoluble part is produced.

The water-in-oil type emulsion is inflammable and also has the disadvantage that valuable organic solvents are wastefully consumed. With the suspension polymerization in a hydrophobic solvent, because inflammable substances such as cyclohexane and toluene are used, there is the disadvantage that an enormous cost is required for the production apparatus.

Although precipitation polymerization in an aqueous salt solution is low in equipment cost and is a good process, it has the drawback that the polymer formed tends to stick together and grow into a mass, rendering handling very difficult.

In the process described in Japanese Patent Publication No. 14907/1971, the dispersion is stable only under acidic conditions, and when the carboxyl groups are dissociated, it turns to a gel. However, since an anionic flocculating agent generally manifests its effect by dissociating the carboxyl groups and extending the polymer chain, the acidic flocculating agent does not manifest a satisfactory effect if not neutralized before use except in the case where it is used in an alkaline solution at a high pH. Furthermore, it is difficult using this process to produce a polymer flocculating agent having a degree of anionization of 15 mole% or less which is most effective as a flocculating agent.

FR-A-2251367 discloses the production of a polymer dispersion by a process whereby a water-soluble monomer is dissolved in an organic phase, which organic phase comprises a suspension of droplets in an aqueous salt solution. The salt is present in the aqueous phase to prevent the water-soluble monomer from dissolving in the aqueous phase. The monomer is cross-linked in the organic phase to produce a dispersion of microfine, substantially spherical, polymer beads in the aqueous phase.

It is an object of the present invention to enable the provision of a process for the preparation of a water-soluble polymer dispersion whereby the above disadvantages may be overcome or at least mitigated.

This invention accordingly provides a method of obtaining a dispersion of a water-soluble polymer by dissolving a monomer in an aqueous salt solution and conducting polymerization while depositing the polymer as fine particles in the presence of a dispersant. The aqueous salt solution is required to dissolve the monomer and precipitate the polymer.

As the dispersant, a polymer electrolyte soluble in an aqueous salt solution is effective.

Where the deposited polymer is an anionic or cationic polymer electrolyte, the polymer electrolyte used as the dispersant is required to have charges of the same kind as the deposited polymer.

The amount of the dispersant used should be 0.1% by weight or more based on the aqueous salt solution. The polymer dispersion obtained is of low viscosity and has good flowability, and thus is convenient for transport by pumping or dissolution. Since no organic solvent us used, there is no risk of inflammability and also the cost is low.

The invention relates in a preferred aspect to a process for the production of an easily flowable water-soluble polymer dispersion which comprises polymerizing an acrylic water-soluble monomer (A) while depositing the polymer with stirring in an aqueous salt solution, in the presence of a dispersant (B).

The acrylic water-soluble monomer employed in the present invention is at least one water-soluble monomer (A) of the general formula (I), 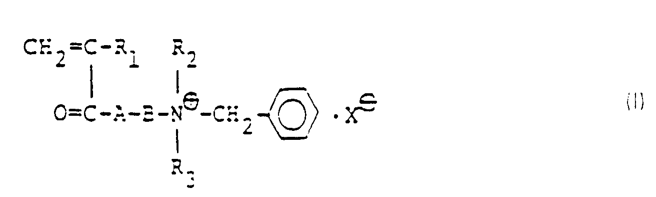 wherein R₁ is H or CH₃, R₂ and R₃ are each an alkyl group of 1 to 3 carbon atoms, A is an oxygen atom or NH, B is an alkylene group of 2 to 4 carbon atoms or a hydroxypropylene group and X⁻ is a counterion, and if desired at least one other water-soluble monomer (B) copolymerizable therewith in a molar ratio of (A) to (B) in the range of 100:0 to 5:95. Polymerization is carried out with stirring in an aqueous salt solution and in the presence of at least 0.1% by weight, based on the aqueous salt solution, of a polymer electrolyte dispersant soluble in the aqueous salt solution and having 20 mole % or more of monomer units of the general formula (III), 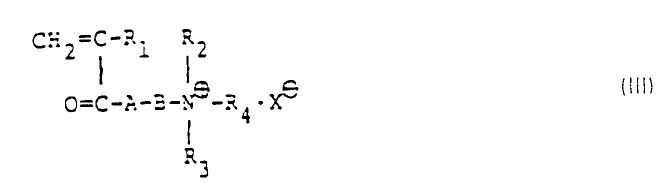 wherein R₁ is H or CH₃, R₂ and R₃ are each an alkyl group of 1 to 2 carbon atoms, R₄ is H or an alkyl group of 1 to 2 carbon atoms, A is an oxygen atom or NH and B is an alkylene group of 2 to 4 carbon atoms or a hydroxypropylene group and X⁻ is a counterion, the salt and the salt concentration is such that the polymer formed is precipitated.

While one or a combination of two or more of the above-described monomers may be selected, since the polymerization is conducted while depositing the polymer, there is one requisite that the formed polymer of the monomer (A) not be soluble in the aqueous salt solution.

As regards the cationic monomers of the formula (I), a highly hydrophobic benzyl group is attached to the amino group, and, as a result, the monomers of the formula (I) do not dissolve in the aqueous salt solution even in homopolymerization and may be used at proportions in a wide range.

Further, since this invention relates to a process for the production of a water-soluble polymer, as long as the polymer of the water-soluble monomer (A) is water soluble, the combination of the monomers is not restricted to those described above. For example, a monomer having solubility in water to some degree such as acrylonitrile etc. may also be used as long as the copolymer with the water-soluble monomer (A) is water-soluble.

There is a requirement that the aqueous salt solution which is a dispersion medium for the polymerization should not dissolve the polymerization product. Representative salts include sodium sulfate, ammonium sulfate, magnesium sulfate, aluminium sulfate, sodium chloride, sodium dihydrogenphosphate, diammonium hydrogenphosphate, dipotassium hydrogenphosphate and mixtures of two or more of these salts. Apart from these salts, those others which do not dissolve the polymerization product are also encompassed in the scope of this invention.

While the concentration of the aqueous salt solution is not particularly restricted and varies depending on the molar ratio of the ionic monomers and the salt used, the range of from 15% by weight to the upper limit of solubility is generally preferred. Further, it is also possible to reduce the viscosity of the dispersion by further adding the salt in the range of solubility to the dispersion after polymerization.

The amount of the dispersant used is preferably 0,1% by weight or more based on the aqueous salt solution, and with less than 0.1%, the formed polymer cannot be obtained in a dispersed form and sticks to each other to grow into a bigger mass, and thus it is not preferred.

The polymer electrolyte to be present as the dispersant on polymerization is not particularly restricted as long as it is soluble in the aqueous salt solution used for polymerization.

Where the formed polymer is cationic, then a cationic polymer electrolyte is preferred.

The anionic polymer electrolyte is preferably a polymer of an acrylic acid alkali metal salt, a 2-acrylamido-2-methylpropanesulfonic acid alkali metal salt, or a copolymer containing at least 30 mole% thereof, and the cationic polymer electrolyte is preferably a polymer of one or more cationic monomers of the following formula (III) or a copolymer containing 20 mole% or more thereof: 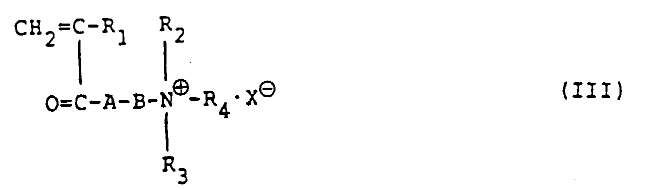 wherein R₁ is H or CH₃; R₂ and R₃ are each an alkyl group of 1-2 carbon atoms; R₄ is H or an alkyl group of 1-2 carbon atoms; A is an oxygen atom or NH; B is an alkylene group of 2-4 carbon atoms or a hydroxypropylene group; and X⁻ is an anionic counterion.

While representative examples of the cationic monomers of the formula (III) include dimethylaminoethyl (meth)acrylate, dimethylaminopropyl (meth)acrylate, dimethylaminohydropropyl (meth)-acrylate and those obtained by quaternizing those with methyl chloride, dimethylsulfuric acid etc., monomers satisfying the formula (III) may all be used.

The polymerizing method is outlined below, and more detail will be later described in the examples.

A predetermined acrylic water-soluble monomer (A) is charged into an aqueous salt solution in which a dispersant has been already dissolved, oxygen is displaced by nitrogen gas, then a polymerization initiator Is added, and the polymerization is started with stirring. When the polymerization reaches completion, polymer particles of a particle diameter of 1mm or less may be obtained In a dispersed form. The monomer concentration at that time Is In the range of 5 parts by weight or more based on 100 parts by weight of the aqueous salt solution, and If it is less than 5 parts by weight, there is no superiority to aqueous solution polymerization. On the other hand, the upper limit is where the flowablity of the product is lost.

The polymerization temperature varies depending on the kind of polymerization initiator and is not particularly restricted as long as the initiator functions well. Further, the polymerization initiator is not particularly restricted, and, for example, the conventionally employed redox type, azo type etc. may be used.

### Examples

This invention is more particularly described by the following examples, but it should be unerstood that this invention is not limited to these examples.

### Example 1

To a 1-litre five-necked separable flask equipped with a stirrer, a thermometer, a reflux condenser and a nitrogen inlet tube were added 2.5 g of homopolymer of acryloyloxyethyltrimethylammonium chloride, 112.5 g of ammonium sulfate and 335 g of deionized water and dissolved, then 35.1 g (90 mole%) of acrylamide and 14.9 g (10 mole%) of acryloyloxyethyldimethylbenzylammonium chloride were charged, then heated to 50°C and the air inside was displaced by nitrogen.

One g of a 1% aqueous solution of 2,2'-azobis(2-amidinopropane) hydrochloride was added thereto as a polymerization initiator, and the polymerization was conducted with stirring at 50°C for 10 hours to obtain a polymer in the form of fine particles dispersed in the aqueous salt solution.

The viscosity of this product was 500 cp at 25°C, and the viscosity of this polymer at 0.5% in 1 N sodium chloride aqueous solution was 22.0 cp.

### Example 2

To the separable flask used in Example 1 were added 3.8 g of a copolymer obtained by polymerizing acrylamide and acryloyloxyethyltrimethylammonium chloride at a molar ratio of 75:25, 42.5 g of aluminum sulfate, 42.5 g of sodium sulfate and 336.2 g of deionized water and dissolved, then 52.7 g (90 mole%) of acrylamide and 22.3 g (10 mole%) of acryloyloxyethyldimethylbenzylammonium chloride were charged, then heated to 50°C and the air inside was displaced by nitrogen.

1.5 g of a 1% aqueous solution of 2,2'-azobis(2-amidinopropane) hydrochloride was added thereto, and the polymerization was conducted with stirring at 50°C for 10 hours to obtain a polymer in the form of fine particles dispersed in the aqueous salt solution.

The viscosity of this product was 2400 cp at 25°C, and the viscosity of this polymer at 0.5% in 1 N sodium chloride aqueous solution was 32.0 cp.

### Example 3

To a 1-litre five-necked separable flask equipped with a stirrer, a thermometer, a reflux condenser, and a nitrogen inlet tube and a dropping funnel were added 1.3 g of a homopolymer of methacryloyloxyethyltrimethylammonium chloride, 90 g of sodium sulfate and 318.7 g of deionized water and dissolved, then heated to 50°C and the air inside was displaced by nitrogen. Thereafter, that obtained by mixing and dissolving 34.6 g (90 mole%) of acrylamide, 15.4 g (10 mole%) of methacryloyloxyethyldimethylbenzyl-ammonium chloride, 40 g of deionized water and 0.05 g of 2,2'-azobis(2-amidinopropane) hydrochloride was put into the dropping funnel, and gradually added dropwise to the aqueous salt solution with stirring. By polymerizing at 50°C for 10 hours, a polymer was obtained in the form of fine particles dispersed in the aqueous salt solution.

The viscosity of this product was 1080 cp at 25°C, and the viscosity of the polymer at 0.5% in 1 N sodium chloride aqueous solution was 20.0 cp.

### Example 4

To the separable flask used in Example 1 were added 3.8 g of a copolymer obtained by polymerizing acrylamide and methacryloyloxyethyltrimethylammonium chloride at a molar ratio of 50:50, 127.5 g of ammonium sulfate and 293.7 g of deionized water and dissolved, then 30.0 g (70 mole%) of acrylamide, 12.4 g (10 mole%) of dimethylaminoethyl methacrylate sulfate and 32.6 g (20 mole%) of acryloyloxyethyl-dimethylbenzylammonium chloride were charged thereinto, heated to 40°C and the air inside was 5 displaced by nitrogen.

0.38 g of a 10% aqueous solution of ammonium persulfate and 0.38 g of a 10% aqueous solution of sodium hydrogensulfite were added thereto, and the polymerization was conducted with stirring at 40°C for 10 hours to obtain a polymer in the form of fine particles dispersed in the aqueous salt solution.

The viscosity of this product was 2820 cp at 25°C, and the viscosity of the polymer at 0.5% in 1 N sodium sulfate aqueous solution was 17.0 cp.

### Example 5

To the separable flask used in Example 1 were added 10 g of a homopolymer of dimethylaminoethyl methacrylate sulfate, 100 g of sodium chloride and 290 g of delonized water and dissolved, then 32.9 g (65 mole%) of acrylamide and 67.1 g (35 mole%) of acryloyloxyethyldimethylbenzyl chloride were charged thereinto, heated to 50°C, and the air inside was displaced by nitrogen.

0.5 g of a 10% aqueous solution of 2,2'-azobis(2-amidinopropane) hydrochloride and 0.5 g of a 10% aqueous solution of sodium hydrogensulfite were added thereto, and the polymerization was conducted with stirring at 50°C for 10 hours to obtain a polymer in the form of fine particles dispersed in the aqueous salt solution.

The viscosity of this product was 1920 cp at 25°C, and the viscosity of the polymer at 0.5% in a 1 N sodium sulfate aqueous solution was 18.0 cp.

### Example 6

To the separable flask used in Example 1 were added 6.3 g of a homopolymer of acryloyloxyethyltrimethylammonium chloride, 131.3 g of ammonium sulfate and 237.4 g of deionized water and dissolved, then 54.4 g (50 mole%) of methacryloyloxyethyltrimethylammonium chloride and 70.6 g (50 mole%) of acryloyloxyethyldimethylbenzylammonium chloride were charged thereinto, heated to 50°C, and the air inside was displaced by nitrogen.

1.3 g of a 10% aqueous solution of 2.2'-azobis(2-amidinopropane) hydrochloride was added thereto, and the polymerization was conducted with stirring at 50°C for 10 hours to obtain a polymer in the form of fine particles dispersed in the aqueous salt solution.

The viscosity of this product was 2120 cp at 25°C, and the viscosity of the polymer at 0.5% in a 1 N sodium sulfate aqueous solution was 10.3 cp.

### Example 7

To the separable flask used in Example 1 were added 5.0 g of methacryloyloxyethyltrimethylammonium chloride, 100 g of magnesium sulfate and 295 g of deionized water and dissolved, then 100 g of methacryloyloxyethyldimethylbenzylammonium chloride was charged thereinto, heated to 50°C, and the air inside was displaced by nitrogen.

1.0 g of a 10% aqueous solution of 2,2'-azobis(2-amidinopropane) hydrochloride was added thereto, and the polymerization was conducted with stirring at 50°C for 10 hours to obtain a polymer in the form of fine particles dispersed in the aqueous salt solution.

The viscosity of this product was 1080 cp at 25°C, and the viscosity of the polymer at 0.5% in a 1 N sodium sulfate aqueous solution was 14.0 cp.

### Example 8

To the separable flask used in Example 3 were added 8.8 g of a copolymer obtained polymerizing acrylamide and acryloyloxyethyltrimethylammonium at a molar ratio of 40:60, 113.8 g of sodium dihydrogenphosphate and 158.6 g of deionized water and dissolved, heated to 50°C, and the air inside was displaced by nitrogen. Thereafter, that obtained by mixing and dissolving 175 g of acryloyloxyethyldimethylammonium chloride, 43.8 g of deionized water and 0.18 g of 2,2'-azobis(2-amidinopropane) hydrochloride was placed in a dropping funnel, and gradually added dropwise to the aqueous salt solution with stirring. The polymerization was conducted at 50°C for 10 hours to obtain a polymer in the form of fine particles dispersed in the aqueous salt solution.

The viscosity of this product was 460 cp at 25°C, and the viscosity of the polymer at 0.5% in a 1 N sodium sulfate aqueous solution was 13.5 cp.

### Example 9

To the separable flask used in Example 1 were added 10 g of homopolymer of methacrylamidopropyltrimethylammonium chloride, 120 g of ammonium sulfate and 270 g of deionized water and dissolved, 100 g of acrylamidopropyldimethylbenzylammonium chloride was charged thereinto, then heated to 50°C and the air inside was displaced by nitrogen.

1.0 g of a 10% aqueous solution of 2,2'-azobis(2-amidinopropane) hydrochloride was added thereto, and the polymerization was conducted with stirring at 50°C for 10 hours to obtain a polymer in the form of fine particles dispersed in the aqueous salt solution.

The viscosity of this product was 960 cp at 25°C, and the viscosity of the polymer at 0.5% in a 1 N sodium sulfate aqueous solution was 15.0 cp.

### Example 10

To the separable flask used in Example 1 were added 2.3 g of a homopolymer of acryloyloxyethyltrimethylammonium chloride (the viscosity of its aqueous solution having a pure content of 0.5% being 20 cp at 25°C), 85 g of ammonium sulfate, 3.8 g of glycerin and 333.9 g of deionized water and dissolved, 34.7 g (75 mole%) of acrylamide, 31.5 g (18 mole%) of acryloyloxyethyldimethylbenzylammonium chloride and 8.8 g (7 mole%) of acryloyloxyethyltrimethylammonium chloride were charged thereinto, heated to 45°C and the air inside was displaced by nitrogen.

2.3 g of a 1% aqueous solution of 2,2'-azobis(2-amidinopropane) hydrochloride was added thereto, and the polymerization was conducted with stirring at 45°C for 10 hours to obtain a polymer in the form of fine particles dispersed in the aqueous salt solution.

The viscosity of this product was 720 cp at 25°C, and the viscosity of the polymer at 0.5% in 3% sodium sulfate aqueous solution was 65 cp.

### Comparative Example 1

To the separable flask used in Example 1 were added 112.5 g of ammonium sulfate and 337.5 g of deionized water and dissolved, then 35.1 g (90 more%) of acrylamide and 14.9 g (10 mole%) of acryloyloxyethyldimethylbenzylammonium chloride were charged thereinto, heated to 50°C, and the air inside was displaced by nitrogen.

1.0 g of a 1% aqueous solution of 2,2'-azobis(2-amidinopropane) hydrochloride was added thereto, and the polymerization was conducted with stirring at 50°C for 10 hours to obtain a polymer in the form of dispersed particles of a particle diameter of 2-3 mm, but when the polymer to be co-present was not present as above, these particles, after one night's standing, stuck to each other to grow into a mass and did not disperse again.

### Comparative Example 2

To the separable flask used in Example 1 were added 112.5 g of ammonium sulfate and 337.5 g of deionized water and dissolved 50 g of acrylamide was charged thereinto, heated to 40°C, and the air inside was displaced by nitrogen.

1 g of a 1% aqueous solution of ammonium persulfate and 1 g of a 1% aqueous solution of sodium hydrogensulfite were added thereto, and the polymerization was conducted with stirring at 40°C, but 10 minutes later, the viscosity is increased and the whole system became a mass.

### Example 11

The products of this invention produced by the examples and a prouct produced by conventional aqueous solution polymerization were compared for the properties.

**TABLE 1**

| Product Name | Concentration of the Polymer | Solution Viscosity¹⁾ | Product Viscosity |
|---|---|---|---|
| Example 1 | 10% | 22.0 (cp) | 500 (cp) |
| 2 | 15 | 32.0 | 2400 |
| 3 | 10 | 20.0 | 1080 |
| Aqueous Solution Polymerized Product²⁾ | 10 | 20.0 | Gel form and shows no flowability |

| | | | |
|---|---|---|---|
| 1) The solution viscosity is the viscosity of the polymer at 0.5% in 1 N sodium chloride aqueous solution. | | | |
| 2) The monomer composition of the aqueous solution polymerized product was the same as in Examples 1 and 2. | | | |

Thus, those having the same molecular weight were obtained as flowable products having lower viscosity as compared with the aqueous solution polymerized product.

### Example 12

The products of this invention produced in the examples and a commercially available powdered product were compared for the time to be completely dissolved in water.

(Dissolution was conducted by a magnetic stirrer to make an aqueous solution of 0.2% of the polymer).

**TABLE 2**

| Product Name | Concentration of the Polymer | Solution Viscosity ¹⁾ | Dissolution Time |
|---|---|---|---|
| Example 1 | 10% | 22.0 (cp) | 20 (min) |
| 2 | 15 | 32.0 | 20 |
| 3 | 10 | 20.0 | 20 |
| Powdered Product²⁾ | 95 | 20.0 | 60 |

| | | | |
|---|---|---|---|
| 1) The solution viscosity is the viscosity of the polymer at 0.5% in 1 N sodium chloride aqueous solution. | | | |
| 2) The monomer composition of the powdered product was the same as in Examples 1 and 2. | | | |

Thus, it was found that the dissolution time is very rapid as compared with the powdered product. The features disclosed in the foregoing description and in the following claim may, both separately and in any combination thereof, be material for realising the invention in diverse forms thereof.

## Claims

1. A process for the production of an aqueous dispersion of a water-soluble polymer, characterized in that at least one water-soluble monomer (A) of the general formula (I), 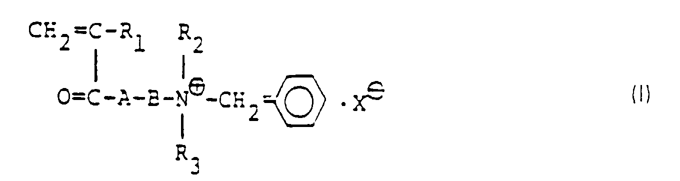 wherein R₁ is H or CH₃, R₂ and R₃ are each an alkyl group of 1 to 3 carbon atoms, A is an oxygen atom or NH, B is an alkylene group of 2 to 4 carbon atoms or a hydroxypropylene group and X⁻ is a counterion, and if desired at least one other water-soluble monomer (B) copolymerizable therewith in a molar ratio of (A) to (B) in the range of 100:0 to 5:95 is polymerized with stirring in an aqueous salt solution and in the presence of at least 0.1% by weight, based on the aqueous salt solution, of a polymer electrolyte dispersant soluble in the aqueous salt solution and having 20 mole % or more of monomer units of the general formula (III), 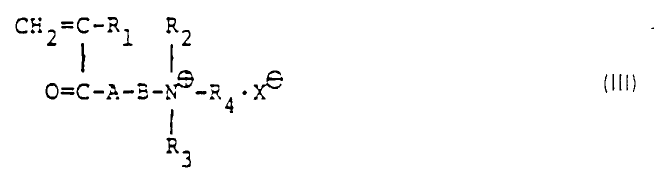 wherein R₁ is H or CH₃, R₂ and R₃ are each an alkyl group of 1 to 2 carbon atoms, R₄ is H or an alkyl group of 1 to 2 carbon atoms, A is an oxygen atom or NH and B is an alkylene group of 2 to 4 carbon atoms or a hydroxypropylene group and X⁻ is a counterion, the salt and the salt concentration is such that the polymer formed is precipitated.

## Revendications

1. Procédé pour la production d'une dispersion aqueuse d'un polymère soluble dans l'eau, caractérisé en ce qu'on polymérise au moins un monomère (A) soluble dans l'eau de formule générale (I): 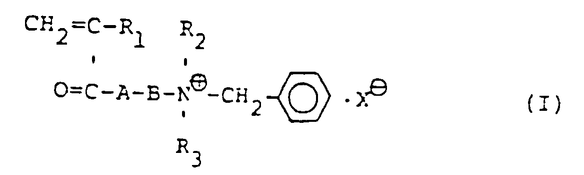 dans laquelle R₁ représente H ou CH₃, R₂ et R₃ représentent chacun un groupe alkyle ayant 1 - 3 atomes de carbone, A représente un atome d'oxygène ou NH, B représente un groupe alkylène ayant 2 à 4 atomes de carbone ou un groupe hydroxypropylène et X⁻ est un contre-ion, et si nécessaire au moins un autre monomère (B) soluble dans l'eau copolymérisable avec lui dans un rapport molaire de (A) à (B) compris dans l'intervalle de 100:0 à 5:95, sous agitation dans une solution saline aqueuse et en présence d'au moins 0,1 % en poids, par rapport à la solution saline aqueuse , d'un dispersant électrolyte polymère soluble dans la solution saline aqueuse et ayant 20 % en moles ou plus de motifs monomères de formule générale (III): 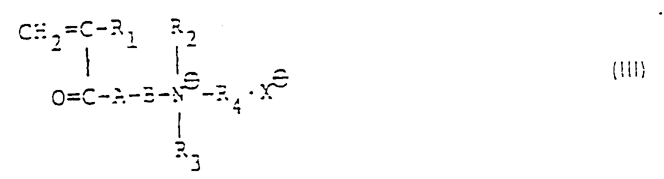 dans laquelle R₁ représente H ou CH₃, R₂ et R₃ représentent chacun un groupe alkyle ayant 1 - 2 atomes de carbone, R₄ représente H ou un groupe alkyle ayant 1 - 2 atomes de carbone, A représente un atome d'oxygène ou NH et B représente un groupe alkylène ayant de 2 à 4 atomes de carbone ou un groupe hydroxypropylène et X⁻ est un contre-ion, le sel et la concentration du sel étant tels que le polymère formé est précipité.

## Patentansprüche

1. Verfahren zur Herstellung einer wäßrigen Dispersion eines wasserlöslichen Polymers, dadurch gekennzeichnet, daß mindestens ein wasserlösliches Monomer (A) der allgemeinen Formel (I) 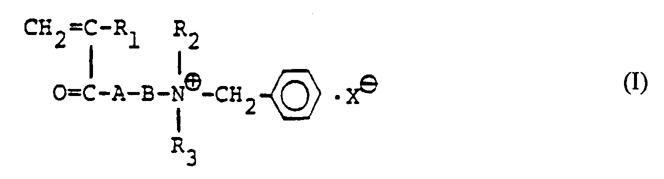 in der der Rest R₁ gleich H oder CH₃ ist, die Reste R₂ und R₃ jeweils ein Alkylrest mit 1 bis 3 Kohlenstoffatomen sind, der Rest A ein Sauerstoffatom oder NH ist, der Rest B ein Alkylenrest mit 2 bis 4 Kohlenstoffatomen oder ein Hydroxypropylenrest ist und X⁻ ein Gegenion ist, und gegebenenfalls mindestens ein anderes mit diesem copolymerisierbares wasserlösliches Monomer (B) in einem Molverhältnis von (A) zu (B) im Bereich von 100:0 bis 5:95 polymerisiert wird unter Rühren in einer wäßrigen Salzlösung und in Gegenwart von mindestens 0,1 Gew.-%, bezogen auf die wäßrige Salzlösung, eines Polymerelektrolyt-Dispersants, das in der wäßrigen Salzlösung löslich ist und 20 Mol-% oder mehr Monomereinheiten der allgemeinen Formel (III) 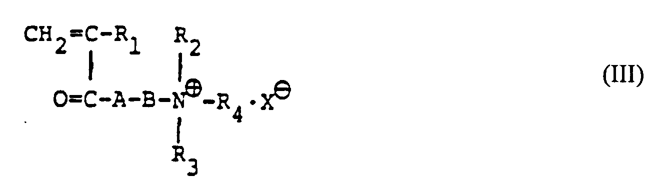 enthält, wobei der Rest R₁ gleich H oder CH₃ ist, die Reste R₂ und R₃ jeweils ein Alkylrest mit 1 bis 2 Kohlenstoffatomen sind, der Rest R₄ gleich H oder ein Alkylrest mit 1 bis 2 Kohlenstoffatomen ist, der Rest A ein Sauerstoffatom oder NH ist und der Rest B ein Alkylenrest mit 2 bis 4 Kohlenstoffatomen oder ein Hydroxypropylenrest ist und X⁻ ein Gegenion ist, wobei das Salz und die Salzkonzentration derart sind, daß das gebildete Polymer ausfällt.
